# EUROPÄISCHE PATENTSCHRIFT

(11) **EP 0 987 157 B1**
(45) Veröffentlichungstag und Bekanntmachung des Hinweises auf die Patenterteilung: **24.05.2006**
(21) Anmeldenummer: 99113810.8
(22) Anmeldetag: 15.07.1999
(51) Int. Cl.: B60T 8/00

(54) **Verfahren zur Abbremsung eines Fahrzeugs**
Method for braking of a vehicle
Procédé pour le freinage d'un véhicule

(30) Priorität: 16.09.1998 DE 19842315
(43) Veröffentlichungstag der Anmeldung: 22.03.2000
(73) Patentinhaber: WABCO GmbH & CO. OHG, 30453 Hannover (DE)
(72) Erfinder: Rosendahl, Hartmut, 30167 Hannover (DE); Hinz, Wolfgang, 31515 Wunstorf (DE); Lenz, Thomas, 30880 Laatzen (DE)
(74) Vertreter: Schrödter, Manfred

(56) Entgegenhaltungen:
- DE-A- 3 840 564
- DE-A- 4 242 732
- DE-A- 19 603 430
- DE-A- 19 713 920
- DE-C- 19 514 185

## Beschreibung

Die Erfindung bezieht sich auf ein Verfahren zur Abbremsung eines Fahrzeugs gemäß dem Oberbegriff des Patentanspruchs 1.

Es sind bestimmte Fahrzeugtypen im Einsatz, welche bei Bremsvorgängen besonders kritisch reagieren können. Derartige Fahrzeugtypen sind beispielsweise Sattelzugmaschinen, die ohne Auflieger betrieben werden. Diese Fahrzeuge haben einen besonders kurzen Radstand und können zudem mit Fahrerhäusern ausgerüstet sein, die einen besonders hohen Schwerpunkt ergeben. Bei scharfen Abbremsungen ist es deshalb möglich, daß derartige Fahrzeuge nach vorne umkippen können.

Um derartige Unfälle zu vermeiden, ist bereits vorgeschlagen worden (DE 197 13 920), im Falle eines Blockierschutzbetriebes an der Hinterachse den möglichen Vorderachs-Bremsdruck auf einem niedrigen Bremsdruckniveau zu begrenzen. Hierzu wird ein besonderes Druckbegrenzungsventil in die Bremsanlage eingesetzt, welches unter bestimmten Bedingungen aktivierbar ist.

Nachteilig an der vorgeschlagenen Anordnung ist, daß für das zusätzliche Druckbegrenzungsventil Kosten anfallen. Weiterhin hat das Einregeln eines festen Bremsdruckes mittels eines Druckbegrenzungsventils den Nachteil, daß bei unterschiedlichen Straßenverhältnissen und auch bei Ungleichmäßigkeiten in der Bremsanlage noch Bremskraftunterschiede auftreten können.

Aus dem Gattungsgemäßen DE 195 14 185 C1 ist weiter eine Bremsanlage mit lastabhängiger Regelung des Vorderachs-Bremsdruckes von Fahrzeugen, insbesondere von Nutzfahrzeugen, bekannt. Hierbei ist ein Druckwandler zur Regelung des Vorderachs-Bremsdruckes in Abhängigkeit des von einem lastabhängigen Bremskraftregler ausgesteuerten Hinterachs-Bremsdruckes zugeordnet. Hierdurch wird insbesondere bei einem Solobetrieb einer Sattelzugmaschine bei Unterschreitung einer bestimmten Hinterachslast automatisch der Vorderachs-Bremsdruck unter den normalen Leerlast-Bremsdruck abgesenkt.

Der Erfindung liegt die Aufgabe zugrunde, ein Verfahren zur Abbremsung eines Fahrzeugs, insbesondere eines Fahrzeugs mit kurzem Radstand und hohem Schwerpunkt vorzuschlagen, bei welchem die obengenannten Nachteile vermieden werden.

Diese Aufgabe wird durch die im Patentanspruch 1 angegebene Erfindung gelöst. Vorteilhafte Ausgestaltungen und Weiterbildungen sind in den Unteransprüchen angegeben.

Bei höheren Fahrzeugverzögerungen tritt eine dynamische Achslastverlagerung zur Vorderachse auf. Diese kann bei den oben erwähnten kritischen Fahrzeugen zu einem Abheben der Hinterachse mit anschließendem Kippen des Fahrzeugs nach vorne führen. Durch das erfindungsgemäße Verfahren wird diese gefährliche Erscheinung zuverlässig unterbunden.

Die Erfindung läßt sich mit nur geringem zusätzlichen Aufwand besonders in Verbindung mit einer blockiergeschützten Bremsanlage jeglicher Bauart und für jede Art Druckmittel (pneumatisch oder hydraulisch) ausführen. Unterschiedliche Straßenzustände oder ungleichmäßig ar-beitende Bremsanlagen machen sich nicht mehr negativ bemerkbar.

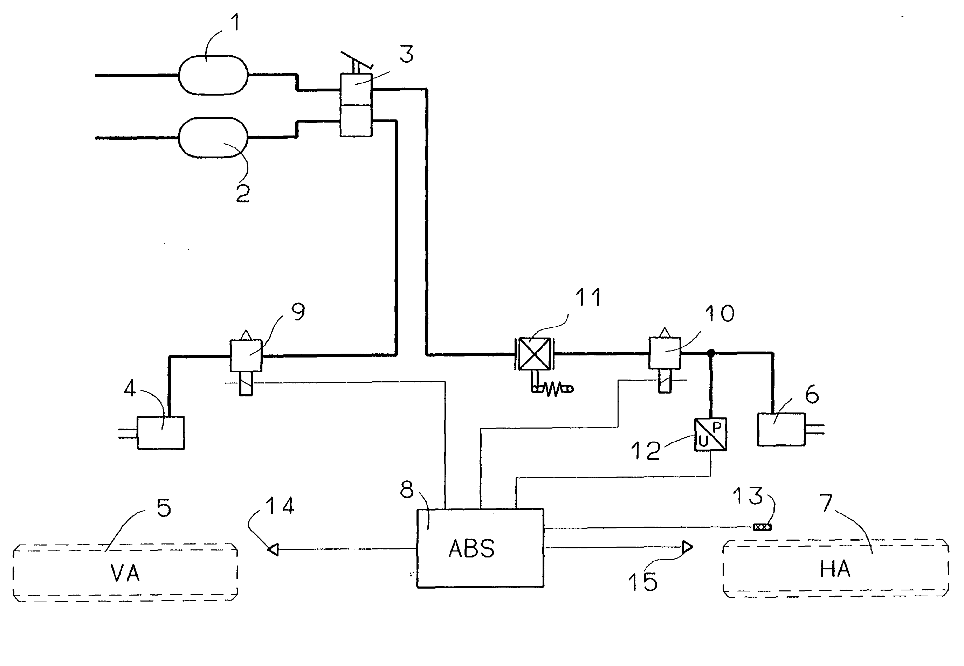

Die Erfindung wird im folgenden anhand einer Zeichnung dargestellt. Dabei sind für Druckleitungen dickere Linien und für elektrische Leitungen dünnere Linien vorgesehen. Die Zeichnung zeigt schematisch eine mit Druckluft betriebene Bremsanlage für einen Lkw, die zusätzlich mit einem Antiblockiersystem (ABS) ausgerüstet ist. Anstelle eines ABS kann auch ein elektrisches Bremssystem (EBS) vorgesehen sein, in welchem üblicherweise ein ABS integriert ist. Anstelle einer pneumatischen Bremsanlage kann auch eine hydraulisch oder elektrisch betätigte Bremsanlage vorgesehen sein.

Die einzige Figur zeigt schematisch ein Fahrzeug mit pneumatisch betriebener Bremsanlage und mit einem integrierten Antiblockiersystem (ABS). Es sind nur die Räder und zugehörigen pneumatischen Bauteile einer Fahrzeugseite dargestellt. Die zur Betätigung der Bremsen benötigte Druckluft wird in Druckluftbehältern (1, 2) bereitgestellt. Über ein Abstufungsventil bzw. Trittplattenventil (3) kann der Fahrer den Vorratsdruck auf ein zur Bremsung gewünschtes Maß verringern. Das Trittplattenventil (3) ist zweikreisig ausgebildet und führt zum einen über ein ABS-Regelventil (9) zu einem Bremszylinder (4) für ein Rad (5) der Vorderachse (VA). Der andere Bremskreis führt über ein ALB-Ventil (11) und ein weiteres ABS-Regelventil (10) zu einem Bremszylinder (6) für ein Rad (7) der Hinterachse (HA). Das Antiblockiersystem (8) erhält über Radsensoren (14, 15) eine Information über das Drehverhalten der Räder. Sollten diese eine Blockierneigung zeigen, gibt das ABS in bekannter Weise elektrische Signale an die Regelventile (9, 10) aus, welche den Bremsdruck herabsetzen und somit die Blockierneigung wieder beseitigen können.

Das ABS (8) besitzt weiter Eingänge für einen Drucksensor (12) zur Messung des Bremsdruckes in den Bremszylindern der Hinterachse sowie für einen Hinterachs-Lastsensor (13). Wie im folgenden näher ausgeführt wird, sind die genannten Bauteile (12, 13) nicht für alle Varianten der Erfindung erforderlich. Das ALB-Ventil (11) verringert in bekannter Weise den Bremsdruck für die Bremszylinder der Hinterachse in Abhängigkeit von der Beladung des Fahrzeugs.

Das erfindungsgemäße Verfahren zur Abbremsung eines Fahrzeugs funktioniert nun so, daß ständig die Hinterachslast des Fahrzeugs erfaßt wird. Falls festgestellt wird, daß diese einen vorbestimmten Grenzwert unterschreitet, wird durch das ABS (8) beim Abbremsen des Fahrzeugs (Teilbremsung) die Fahrzeugverzögerung auf einen vorbestimmten Maximalwert begrenzt. Das bedeutet mit anderen Worten, daß das ABS diesen Wert der Fahrzeugverzögerung einregelt. Hierzu sind im ABS (8) geeignete zusätzliche elektronische Einrichtungen und/oder eine entsprechende Programmerweiterung in den enthaltenen Mikroprozessoren vorgesehen. Die Begrenzung der Fahrzeugverzögerung erfolgt durch eine automatische Druckverringerung in den Bremszylindern (4) der Vorderachse (VA). Diese kann durch ein besonderes Druckregelventil eingestellt werden. Besonders vorteilhaft ist es aber, die Druckverminderung durch eine entsprechende Ansteuerung der zugehörigen ABS-Regelventile (9) zu bewirken. Das entsprechende Regelventil (9) wird dann derart in die Stellung "Druck senken" bzw. "Druck halten" gesteuert, daß der obengenannte Maximalwert der Fahrzeugverzögerung eingeregelt wird. Ein etwaiger höherer vom Fahrer vorgegebener Bremsdruck wird also nicht durchgelassen.

Zur Einregelung der vorbestimmten maximalen Fahrzeugverzögerung muß der Istwert der Fahrzeugverzögerung bekannt sein. Diesen kann das ABS-System aus dem Durchschnitt aller Radverzögerungen berechnen. Diese Radverzögerungen (-b) werden von üblichen ABS-Systemen erfaßt. Es ist auch möglich, die Fahrzeugverzögerung durch eine Differenzierung der intern gebildeten Fahrzeug-Referenzgeschwindigkeit zu berechnen. Auch die genannte Fahrzeug-Referenzgeschwindigkeit (vRef) wird von üblichen ABS-Systemen stets gebildet.

Ein besonderer Vorteil des erfindungsgemäßen Verfahrens liegt darin, daß keine Druckmessung im Bremszylinder (4) notwendig ist. Eine kostenaufwendige Druckmessdose ist deshalb nicht erforderlich.

Die für das Verfahren notwendige Erfassung der Hinterachslast kann auf verschiedene Weise erfolgen.

Zum einen kann eine Abschätzung der Hinterachslast durch eine Messung des ABS-Abregeldruckes im Bremszylinder (6) der Hinterachse (HA) während einer ABS-geregelten Bremsung mittels eines Drucksensors (12) erfolgen. Als Abregeldruck wird dabei der Druck verstanden, bei dem durch das ABS-Regelventil (10) der Bremszylinder (6) im Anschluß an eine steile Druckerhöhung wieder entlüftet wird. Dieser Abregeldruck stellt sich bei hoher Hinterachslast höher ein als bei niedriger Hinterachslast, da mit der Höhe der Hinterachslast auch die Reibung zwischen dem Hinterrad (7) und der Straßenoberfläche ansteigt. Hierdurch sind höhere Bremsdrücke möglich, bevor das Rad instabil wird und der Bremsdruck wieder gesenkt wird. Nachteilig an dieser Methode der Achslasterfassung ist jedoch, daß, wie oben beschrieben, die Art der Straßenoberfläche (rau oder schüpfrig) mit eingeht und das Ergebnis verfälscht.

Weiter ist eine Erfassung der Hinterachslast auch durch einen separaten Lastsensor (13) möglich. Ein solcher Lastsensor kann an einer beliebigen geeigneten Stelle, z. B. an einer Blattfeder, angebracht werden. Dies ergibt exaktere Meßwerte, ist jedoch entsprechend kostenaufwendiger.

Weiter ist eine Erfassung der Hinterachslast auch durch eine Berechnung der Fahrzeugmasse aus der Fahrzeugverzögerung und -beschleunigung möglich. Diese Berechnung kann in der Elektronik des ABS-Systems (8) durchgeführt werden. Eine solche Gewichtsberechnung ist z. B. aus der DE 32 46 201 A1 bekannt. Diese Methode hat den Vorteil, daß keine zusätzliche Hardware, also Druckmeßdosen (12) oder Lastsensoren (13) benötigt werden. Dies bedeutet, daß diese Methode besonders kostengünstig ist, und dies bei noch ausreichend guter Messgenauigkeit.

Schließlich ist die Erfassung der Hinterachslast durch einen elektrischen Kontakt (Endschalter) oder einen Nährungs-Sensor möglich, der lediglich auf das Vorhandensein eines Aufliegers auf der Hinterachse anspricht (nicht dargestellt).

## Patentansprüche

1. Verfahren zur Abbremsung eines Fahrzeugs mit mindestens einer Vorderachse (VA) (5) und Hinterachse (HA) (7), und mit einem Antiblockiersystem (ABS) (8), **dadurch gekennzeichnet, daß** die Hinterachslast des Fahrzeugs erfaßt wird, und bei Unterschreitung eines vorbestimmten Grenzwertes der Hinterachslast die Fahrzeugverzögerung beim Abbremsen durch eine automatische geregelte Druckverminderung an den Vorderachsbremszylindern (4) auf eine vorbestimmte Maximalverzögerung begrenzt wird.

2. Verfahren nach Anspruch 1, **dadurch gekennzeichnet, daß** die Druckverminderung der Vorderachsbremszylinder (4) durch eine entsprechende Ansteuerung der zugehörigen ABS-Regelventile (9) erfolgt.

3. Verfahren nach Anspruch 1 bis 2, **dadurch gekennzeichnet, daß** die Erfassung der Hinterachslast durch Messung des Abregeldruckes der Hinterachsbremszylinder (6) während einer ABS-geregelten Bremsung mittels eines Drucksensors (12) erfolgt.

4. Verfahren nach Anspruch 1 bis 2, **dadurch gekennzeichnet, daß** die Erfassung der Hinterachslast durch einen Lastsensor (13) erfolgt.

5. Verfahren nach Anspruch 1 bis 2, **dadurch gekennzeichnet, daß** die Erfassung der Hinterachslast durch eine Berechnung aus der Fahrzeugverzögerung und -beschleunigung erfolgt.

6. Verfahren nach Anspruch 1 bis 2, **dadurch gekennzeichnet, daß** die Erfassung der Hinterachslast durch einen Kontakt oder einen Nährungssensor erfolgt, der auf das Vorhandensein eines Aufliegers anspricht.

7. Verfahren nach einem oder mehreren der Ansprüche 1 bis 6, **dadurch gekennzeichnet, daß** die Erfassung der Fahrzeugverzögerung durch eine Mittelwertbildung der einzelnen Radverzögerungen erfolgt.

8. Verfahren nach einem oder mehreren der Ansprüche 1 bis 6, **dadurch gekennzeichnet, daß** die Erfassung der Fahrzeugverzögerung durch eine Differenzierung der Fahrzeug-Referenzgeschwindigkeit (vRef) erfolgt.

## Claims

1. Method of braking a vehicle having at least one front axle (VA) (5) and rear axle (HA) (7) and having an anti-lock braking system (ABS) (8), **characterised in that** the rear axle load of the vehicle is ascertained and, if the rear axle load is below a prespecified limit value, the vehicle deceleration during braking is limited to a prespecified maximum deceleration by means of an automatic controlled reduction in pressure at the front axle brake cylinders (4).

2. Method according to claim 1, **characterised in that** the reduction in the pressure of the front axle brake cylinders (4) is carried out by means of appropriate control of the associated ABS control valves (9).

3. Method according to claim 1 to 2, **characterised in that** the rear axle load is ascertained by measuring, by means of a pressure sensor (12), the down-regulation pressure of the rear axle braking cylinders (6) during an ABS-controlled braking operation.

4. Method according to claim 1 to 2, **characterised in that** the rear axle load is ascertained by a load sensor (13).

5. Method according to claim 1 to 2, **characterised in that** the rear axle load is ascertained by calculation from the vehicle deceleration and acceleration.

6. Method according to claim 1 to 2, **characterised in that** the rear axle load is ascertained by a contact or a proximity sensor which responds to the presence of a semi-trailer.

7. Method according to one or more of claims 1 to 6, **characterised in that** the vehicle deceleration is ascertained by determining the mean of the individual wheel decelerations.

8. Method according to one or more of claims 1 to 6, **characterised in that** the vehicle deceleration is ascertained by differentiation of the vehicle reference speed (vRef).

## Revendications

1. Procédé pour le freinage d'un véhicule équipé au moins d'un essieu avant (VA) (5) et d'un essieu arrière (HA) (7), et d'un système d'anti-blocage (ABS) (8), **caractérisé en ce que** la charge de l'essieu arrière du véhicule est détectée, et lors du sous-dépassement d'une valeur limite prédéterminée de la charge de l'essieu arrière, le ralentissement du véhicule lors du freinage est limité à un ralentissement maximal prédéterminé par une réduction de pression réglée automatiquement dans les cylindres de frein de l'essieu avant (4).

2. Procédé selon la revendication 1, **caractérisé en ce que** la réduction de pression du cylindre de freinage de l'essieu avant (4) est réalisée par une commande appropriée de la soupape de réglage de l'ABS appropriée (9).

3. Procédé selon la revendication 1 à 2, **caractérisé en ce que** la détection de la charge de l'essieu arrière est réalisée par la mesure de la pression de coupure du cylindre de freinage de l'essieu arrière (6) pendant un freinage réglé par ABS au moyen d'un capteur de pression (12).

4. Procédé selon la revendication 1 à 2, **caractérisé en ce que** la détection de la charge de l'essieu arrière est réalisée par un capteur de charge (13).

5. Procédé selon la revendication 1 à 2, **caractérisé en ce que** la détection de la charge de l'essieu arrière est réalisée par un calcul à partir du ralentissement et de l'accélération du véhicule.

6. Procédé selon la revendication 1 à 2, **caractérisé en ce que** la détection de la charge de l'essieu arrière est réalisée par un contact ou un capteur d'alimentation, qui correspond à l'existence d'un semi-remorque.

7. Procédé selon l'une ou plusieurs des revendications 1 à 6, **caractérisé en ce que** la détection du ralentissement du véhicule est réalisée par la fixation d'une valeur moyenne des ralentissements des roues individuels.

8. Procédé selon l'une ou plusieurs des revendications 1 à 6, **caractérisé en ce que** la détection du ralentissement du véhicule est réalisée par une différenciation de la vitesse de référence du véhicule (vRef).
